# EUROPÄISCHE PATENTSCHRIFT

(11) **EP 1 078 854 B1**
(45) Veröffentlichungstag und Bekanntmachung des Hinweises auf die Patenterteilung: **10.03.2004**
(21) Anmeldenummer: 00115378.2
(22) Anmeldetag: 15.07.2000
(51) Int. Cl.: B64D 13/06

(54) **Vorrichtung zur Klimatisierung von Passagierflugzeugen**
Device for air-conditioning of passenger aircraft
Dispositif de climatisation d'avion pour le transport de passagers

(30) Priorität: 04.08.1999 DE 19936641
(43) Veröffentlichungstag der Anmeldung: 28.02.2001
(73) Patentinhaber: Airbus Deutschland GmbH, 21129 Hamburg (DE)
(72) Erfinder: Müller, Wolfgang, 21643 Beckdorf (DE)
(74) Vertreter: Hansmann, Dierk, Dipl.-Ing.

(56) Entgegenhaltungen:
- DE-A- 2 834 256
- US-A- 4 261 416
- US-A- 4 263 786
- US-A- 4 430 867
- US-A- 5 086 622
- US-A- 5 299 763
- US-A- 5 732 560

## Beschreibung

Die Erfindung bezieht sich auf eine Vorrichtung zur Klimatisierung des Kabinenbereiches von Passagierflugzeugen mittels von außen zugeführter Frischluft und Zapfluft von einem Triebwerk, mit wenigstens einem Wärmetauscher, einem Gebläse, einem Kompressor, einer Expansionsturbine, einem Kondensator, wenigstens einem Wasserabscheider sowie einem Rückerhitzer.

Klimaaggregate dieser Art für die Kabinenklimaanlagen von Passagierflugzeugen sind bereits bekannt. Mit ihrer Hilfe wird ein Strom von Frischluft erzeugt, dem, um die Temperatur und die Luftgeschwindigkeit in der Ventilationsluft für die Flugzeuginsassen möglichst angenehm zu gestalten, üblicherweise ein Luftstrom in der Art sogenannter Rezirkulationsluft beigemischt wird. Bei dieser Rezirkulationsluft handelt es sich um verbrauchte Kabinenluft, die wiederverwendet wird. Auf diese Weise wird dem Druckrumpf sowohl am Boden als auch während des Fluges ein ständiger Frischluftvolumenstrom zur Ventilation der Kabine, des Cockpits, der Elektronik- sowie der Frachträume zugeführt und es wird insbesondere in der Kabine und im Cockpit eine stets gute Luftqualität gewährleistet.

Die bekannten, zu diesem Zweck verwendeten Klimaaggregate stellen in der Regel ständig die maximal erreichbare Kühlleistung zur Verfügung, wobei der Luft zugleich die maximal mögliche Menge an Wasser entzogen wird, um das Auftreten von Vereisung am Auslaß der zum Klimaaggregat gehörenden Expansionsturbine zu vermindern bzw. vollständig zu vermeiden. Dadurch ist es zwar möglich, die vom Treibwerk benötigte Zapfluftmenge ebenfalls zu minimieren und damit zunächst den Treibstoffverbrauch zu verringern, der Nachteil dieses Systems liegt jedoch darin, daß eine vergleichsweise große Wärmetauscherkapazität erforderlich ist, um die Luft vor der Expansionsturbine zu kühlen und das in ihr enthaltene Wasser zu entfernen. Die dadurch im System auftretenden Widerstände erfordern vergleichsweise hohe Zapfluftdrücke, was wiederum relativ hohe Triebwerksdrehzahlen bzw. eine Entnahme der Zapfluft an einer höheren Verdichterstufe des Triebwerks erforderlich macht. Dies aber führt letztlich wieder zu einem erhöhten Treibstoffverbrauch. Andererseits steht bei einem gleichbleibend angesetzten Treibstoffverbrauch nur eine vergleichsweise geringe Frischluftmenge zur Verfügung.

Aus den Druckschriften US 4,261,416 A und DE 28 34 256 C2 sind bereits Anordnungen zur Klimatisierung von Luftfahrzeugkabinen bekannt geworden. Hierbei besteht der Mangel, daß eine Anpassung an die unterschiedlichen Betriebsverhältnisse mit einem geringen Zapfluftdruck nicht möglich ist.

Die US-A-5 299 763 bescheibt eine Vorrichtung gemäß dem Oberbegriff des Anspruchs 1.

Aufgabe der Erfindung ist es, eine vorrichtung der eingangs genannten Art so auszubilden, daß bei einem möglichst geringen Zapfluftdruck einerseits die volle Systemleistung erreicht und andererseits der Treibstoffverbrauch minimiert wird.

Die Erfindung löst diese Aufgabe, indem sie vorsieht, daß bei einer derartigen Vorrichtung zusätzlich zu dem als Hochdruckwasserabscheider ausgebildeten ersten Wasserabscheider ein Niederdruckwasserabscheider vorgesehen ist, der in einem von dem den Hochdruckwasserabscheider enthaltenden Leitungspfad separierbaren zweiten Leitungspfad angeordnet ist, und daß Abschaltventile zur jeweils alternativen Beaufschlagung eines der beiden die Wasserabscheider enthaltenden Leitungspfade vorgesehen sind.

Vorteilhafte Weiterbildungen der erfindungsgemäßen Vorrichtung, die einerseits einer Minimierung der Anzahl der benötigten Komponenten und damit der Kosten und des Gewichtes und andererseits einer weiteren Steigerung des Wirkungsgrades dienen, sind in den weiteren Ansprüchen angegeben.

Die Vorrichtung nach der Erfindung nutzt dabei zum einen die Vorteile, die ein Klimakreislauf mit einem Hochdruckwasserabscheider bei einem Betrieb am Boden oder in geringen Flughöhen bietet. Sie eröffnet zugleich die Möglichkeit, Teile des Kreislaufs des Klimaaggregates bei Nichtgebrauch abzuschalten und stattdessen einen Niederdruckwasserabscheider zur Aufrechterhaltung der Betriebsfunktion bei niedrigen Zapfluftdrücken zuzuschalten.

Nachfolgend soll die Erfindung anhand von in der Zeichnung dargestellten Ausführungsbeispielen näher erläutert werden. Es zeigen:
- Fig. 1: eine schematische Darstellung eines ersten Klimaaggregates und
- Fig. 2 bis 4: Abwandlungen der Anordnung gemäß Fig. 1 ebenfalls in schematischer Darstellung.

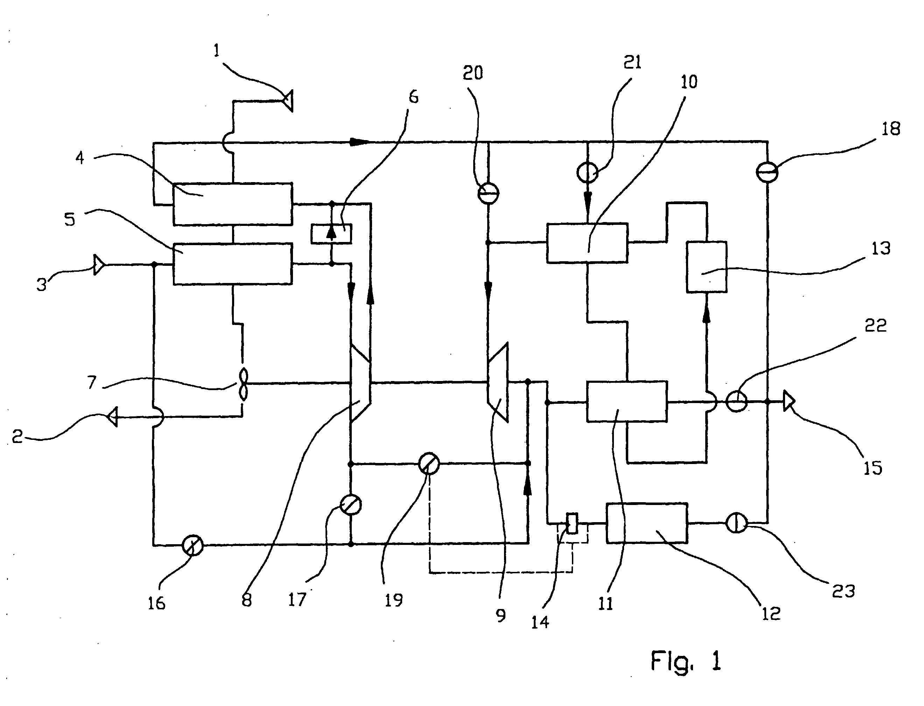

Das in Fig. 1 dargestellte Klimaaggregat weist neben je einem Ein- und Auslaß 1, 2 für von außen in Form von Stauluft (Ram Air) zugeführte Frischluft eine Zuleitung 3 für heiße Zapfluft (Bleed Air) von einem in der Figur nicht dargestellten Triebwerk sowie einen Auslaß 15 für die vom Klimaaggregat bereitgestellte Frischluft zur Kabinenklimatisierung auf. Dem Staulufteinlaß 1 nachgeschaltet sind ein Hauptwärmetauscher 4 sowie ein sogenannter Primärwärmetauscher 5, der zugleich auch von der Triebwerkszapfluft beaufschlagt wird. Zwischen beiden wärmetauschern 4 und 5 ist ferner eine Verbindungsleitung mit einem ersten Ventil 6 angeordnet.

An einen Ausgang des Primärwärmetauschers 5 ist ein Gebläse 7 einer Luftzirkulationsvorrichtung (Air Cycle Machine) angeschlossen, zu der weiterhin ein Kompressor 8 sowie eine Expansionsturbine 9 gehören, wobei die drei Komponenten 7 bis 9 auf einer gemeinsamen Welle angeordnet sind. Zugleich mündet dieser erste Ausgang des Primärwärmetauschers 5 in den Auslaß 2 für die nach außen abgeführte Stauluft. Der zweite Ausgang des Primärwärmetauschers 5 ist mit dem Eingang des Kompressors 8 verbunden, dessen Ausgang wiederum zum Hauptwärmetauscher 4 geführt ist. Die Turbine 9 ist eingangsseitig mit einem Rückerhitzer 10 verbunden, während an ihren sich verzweigenden Ausgang zum einen ein Kondensator 11 und zum anderen ein Niederdruckwasserabscheider 12 angeschlossen sind. Zwischen Rückerhitzer 10 und Kondensator 11 ist ferner ein Hochdruckwasserabscheider 13 angeordnet, während sich zwischen der Turbine 9 und dem Niederdruckwasserabscheider 12 noch ein sogenannter Anti-Eis-Grill 14 befindet. Der Auslaß des Kondensators 11 mündet schließlich ebenso wie der Auslaß des Niederdruckwasserabscheiders 12 in den Auslaß 15 für die vom Klimaaggregat bereitgestellte Frischluft zur Kabinenklimatisierung.

Vervollständigt wird die Anordnung durch eine Reihe von Ventilen, die sich in den verbindungsleitungen zwischen den vorangehend beschriebenen Komponenten befinden. Dies sind ein in der Verbindungsleitung zwischen dem Zapflufteinlaß 3 und dem Auslaß der Turbine 9 angeordnetes Anti-Eis-Ventil 16, ein zwischen diesem Ventil und dem Auslaß des Primärwärmetauschers 5 befindliches Bypassventil 17, ein zweites Bypassventil 18, ein Turbinenumgehungsventil 19 sowie insgesamt vier Abschaltventile 20 bis 23, deren Position nachfolgend noch genauer spezifiziert wird.

Bei dieser Anordnung dient das Turbinenumgehungsventil 19 zur Regelung der Ausgangstemperatur der Expansionsturbine 9. Der Anti-Eis-Grill 14 erzeugt durch die sich einstellende Ansammlung von Eis einen Differenzdruck, der wiederum, wie in der Figur durch die gestrichelte Linie angedeutet, zur Betätigung des Turbinenumgehungsventils 19 dient. Bei einem Betrieb des Klimaaggregates am Boden bzw. in niedrigen Flughöhen, wenn eine hohe Kühlleistung bei gleichzeitig hoher Luftfeuchtigkeit in der umgebenden Außenluft gefordert ist, sind die Abschaltventile 20 und 23 sowie das Turbinenumgehungsventil 19 geschlossen, während die Abschaltventile 21 und 22 geöffnet sind. Bei dieser Schaltanordnung, die auch in Fig. 1 dargestellt ist, wird die zu kühlende Luft durch das herkömmliche Basissystem mit dem Hochdruckwasserabscheider 13 geleitet.

Durch Öffnen der Ventile 20 zwischen dem Eingang des Rückerhitzers 10 und dem Eingang der Expansionsturbine 9 sowie 23 hinter dem Niederdruckwasserabscheider 12 und durch Schließen der Ventile 21 zwischen dem Ausgang des Hauptwärmetauscher 4 und dem Eingang des Rückerhitzers 10 sowie 22 am Ausgang des Kondensators 11 kann der zu kühlende Luftstrom nun derart durch das Kühlaggregat geleitet werden, wie dies andererseits bei Systemen, die ausschließlich über einen Niederdruckwasserabscheider verfügen, mit dem Vorteil der Aufrechterhaltung der Betriebsfunktion bei niedrigen Zapfluftdrücken der Fall ist. Beide Systeme können bei der hier beschriebenen Anordnung durch das Betätigen der genannten Ventile vollständig getrennt voneinander betrieben werden und können somit auch regelungstechnisch vollständig separat behandelt werden.

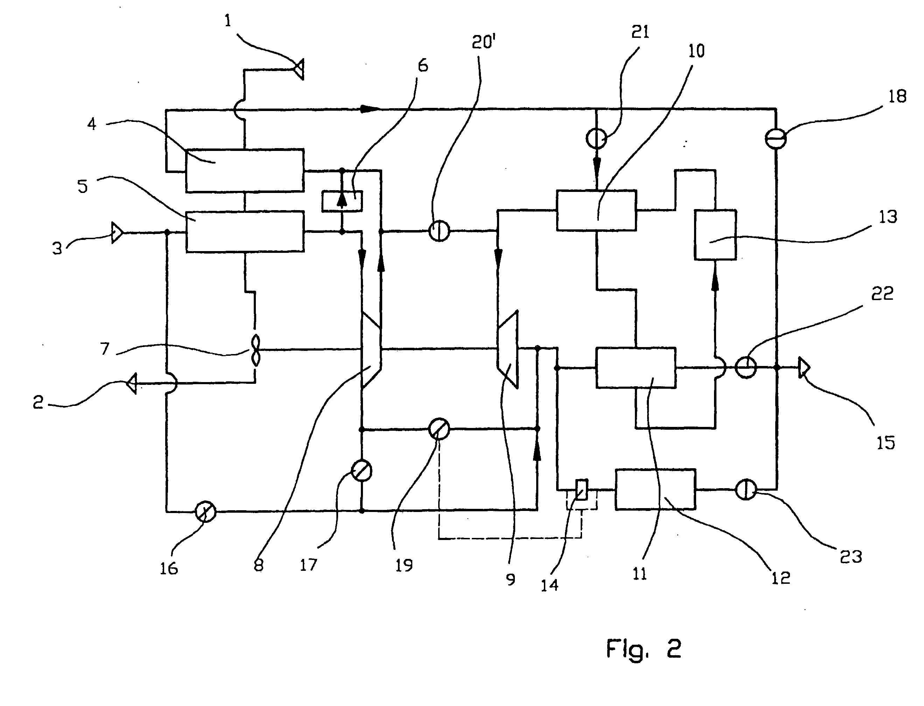

Bei dem in Fig. 2 dargestellten zweiten Ausführungsbeispiel ist bei ansonsten identischer Anordnung wie vorangehend beschrieben eines der vier Abschaltventile, nämlich das Ventil 20', zwischen dem Ausgang des Kompressors 8 und dem Eingang der Turbine 9 angeordnet. Dadurch wird bei ansonsten gleichem Funktionsablauf ein Druckverlust im Hauptwärmetauscher 4 vermieden und es steht an der Turbine 9 mehr Druck zur Expansion zur Verfügung.

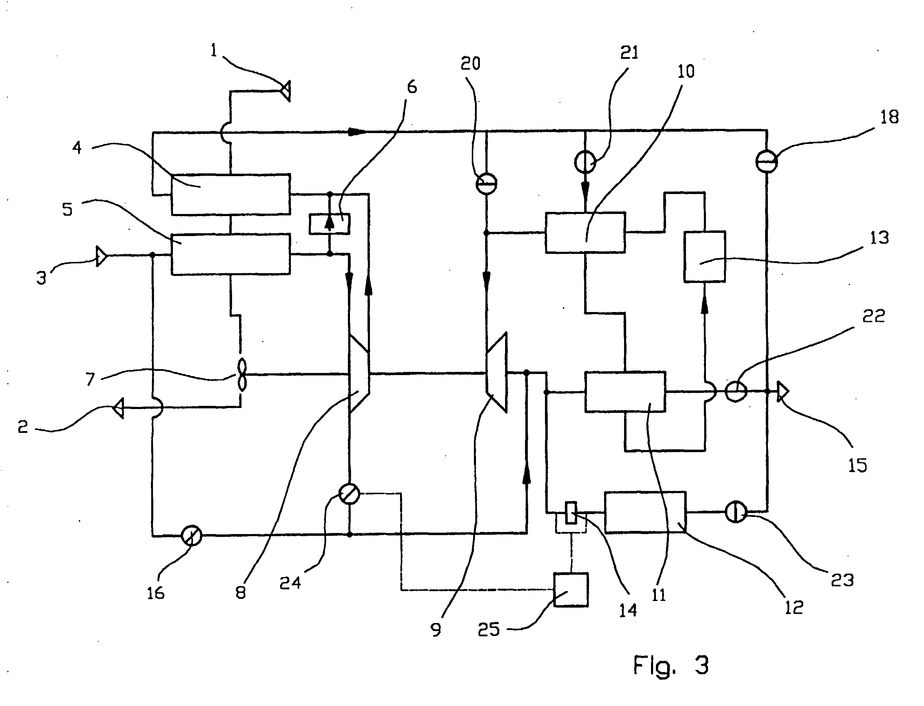

Das in Fig. 3 dargestellte dritte Ausführungsbeispiel unterscheidet sich von den Anordnungen gemäß den Figuren 1 und 2 dahingehend, daß anstelle des Bypassventils 17 und des Turbinenumgehungsventils 19 ein kombiniertes Ventil 24 vorgesehen ist, dessen Ansteuerung über einen am Anti-Eis-Grill 14 angeordneten, den hier auftretenden Differenzdruck erfassenden Signalwandler 25 entweder elektrisch oder pneumatisch erfolgen kann. Dadurch ist auch die Möglichkeit gegeben, das aus dem Differenzdruck am Anti-Eis-Grill 14 resultierende Signal entweder elektrisch oder pneumatisch zu erzeugen.

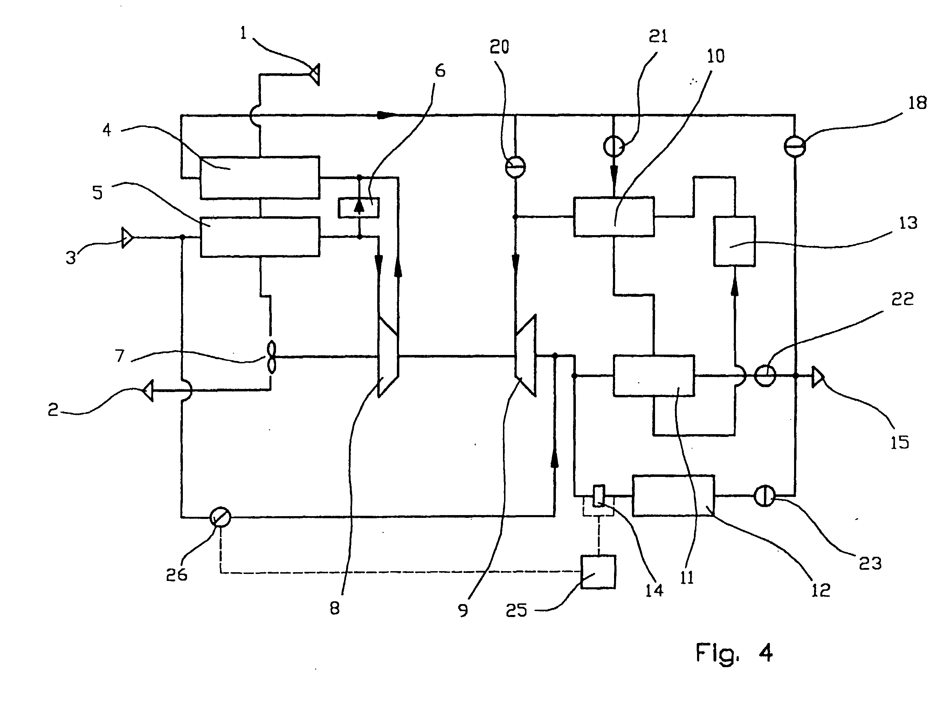

Bei dem abschließend in Fig. 4 dargestellten vierten Ausführungsbeispiel schließlich handelt es sich im Prinzip wieder um die gleiche Anordnung wie in den Figuren 1 und 2, jedoch ist hier anstelle der drei Ventile 16, 17 und 19 ein kombiniertes Ventil 26 vorgesehen. Auch dieses Ventil ist entweder elektrisch oder pneumatisch ansteuerbar. Der Vorteil dieser Anordnung besteht nicht nur darin, daß zwei Ventile eingespart werden, sondern vor allem darin, daß dadurch, daß der Abgriff der Luft direkt vor dem Primärwärmetauscher 5 erfolgt, wärmere Luft verwendet wird und damit die zu regelnden Luftmengen damit insgesamt geringer sind.

Bei allen vier beschriebenen Anordnungen bleiben diejenigen Funktionen, die erforderlich sind, um bei beiden Arten von Klimaaggregaten, d.h. solchen mit Hochdruck- und solchen mit Niederdruckwasserabscheidern, eine sichere Funktion in allen Betriebszuständen zu gewährleisten, unbeeinträchtigt.

## Patentansprüche

1. Vorrichtung zur Klimatisierung des Kabinenbereiches von Passagierflugzeugen mittels von außen zugeführter Frischluft (1) und Zapfluft (3) von einem Triebwerk, mit wenigstens einem Wärmetauscher (4,5), einem Gebläse (7), einem Kompressor (8), einer Expansionsturbine (9), einem Kondensator (11), wenigstens einem Wasserabscheider (13) sowie einem Rückerhitzer (10), **dadurch gekennzeichnet, daß** zusätzlich zu dem als Hochdruckwasserabscheider ausgebildeten ersten Wasserabscheider (13) ein Niederdruckwasserabscheider (12) vorgesehen ist, der in einem von dem den Hochdruckwasserabscheider (13) enthaltenden Leitungspfad separierbaren zweiten Leitungspfad angeordnet ist, und daß Abschaltventile (20, 20', 21 - 23) zur jeweils alternativen Beaufschlagung eines der beiden die Wasserabscheider (12, 13) enthaltenden Leitungspfade vorgesehen sind.

2. Vorrichtung nach Anspruch 1, mit einem bekannten ersten Leitungspfad, den der Rückerhitzer (10), der Kondensator (11) sowie der Hochdruckwasserabscheider (13) bilden, **dadurch gekennzeichnet, dass** in dem von einem ersten Leitungspfad separierbaren zweiten Leitungspfad zusätzlich ein Anti-Eis-Grill (14) angeordnet ist.

3. Vorrichtung nach Anspruch 2, **dadurch gekennzeichnet, daß** zwischen dem Ausgang des Kompressors (8) und dem Eingang des Kondensators (11), parallel zur Expansionsturbine (9), ein weiteres Ventil (19) vorgesehen ist, das über einen sich am Anti-Eis-Grill (14) einstellenden Differenzdruck beaufschlagbar ist.

4. Vorrichtung nach einem der Ansprüche 1 bis 3, **dadurch gekennzeichnet, daß** eines der Abschaltventile (20') zwischen dem Ausgang des Kompressors (8) und dem Eingang der Expansionsturbine (9) angeordnet ist.

5. Vorrichtung nach einem der Ansprüche 2 oder 3, **dadurch gekennzeichnet, daß** zwischen dem Eingang des Kompressors (8) und dem Ausgang der Expansionsturbine (9) ein kombiniertes Ventil (24) vorgesehen ist, dessen Ansteuerung über einen am Anti-Eis-Grill (14) angeordneten, den auftretenden Differenzdruck erfassenden Signalwandler (25) erfolgt.

6. Vorrichtung nach einem der Ansprüche 2 oder 3, **dadurch gekennzeichnet, daß** zwischen der Eintrittsöffnung (3) für die Triebwerkszapfluft und dem Ausgang der Expansionsturbine (9) ein kombiniertes Ventil (26) angeordnet ist, dessen Ansteuerung über einen am Anti-Eis-Grill (14) angeordneten, den auftretenden Differenzdruck erfassenden Signalwandler (25) erfolgt.

7. Vorrichtung nach Anspruch 5 oder 6, **dadurch gekennzeichnet, daß** die Ansteuerung des Ventils (24, 26) elektrisch erfolgt.

8. Vorrichtung nach Anspruch 5 oder 6, **dadurch gekennzeichnet, daß** die Ansteuerung des Ventils (24, 26) pneumatisch erfolgt.

## Claims

1. Device for conditioning the air in the cabin area of passenger aircraft by means of fresh air (1) supplied from outside and bleed air (3) from an engine, with at least one heat exchanger (4, 5), a blower (7), a compressor (8), an expansion turbine (9), a condenser (11), at least one water separator (13) and a back heater (10), **characterized in that** in addition to the first water separator (13) formed as a high-pressure water separator, a low-pressure water separator (12) is provided, which is arranged in a second conduit path that is separable from the conduit path containing the high-pressure water separator (13), and that shut-off valves (20, 20', 21 - 23) are provided for acting alternatively on one of the two conduit paths containing the water separators (12, 13) in each case.

2. Device according to claim 1, with a known first conduit path, which is formed by the back heater (10), the condenser (11) and the high-pressure water separator (13), **characterized in that** an anti-ice grill (14) is arranged additionally in the second conduit path separable from a first conduit path.

3. Device according to claim 2, **characterized in that** a further valve (19) is provided between the output of the compressor (8) and the input of the condenser (11), parallel to the expansion Lurbine (9), which valve can be acted upon via a differential pressure arising at the anti-ice grill (14).

4. Device according to one of claims 1 to 3, **characterized in that** one of the shut-off valves (20') is arranged between the output of the compressor (8) and the input of the expansion turbine (9).

5. Device according to one of claims 2 or 3, **characterized in that** a combined valve (24) is provided between the input of the compressor (8) and the output of the expansion turbine (9), which valve is activated via a signal converter (25) that is arranged on the anti-ice grill (14) and detects the differential pressure arising.

6. Device according to one of claims 2 or 3, **characterized in that** a combined valve (26) is arranged between the inlet opening (3) for the engine bleed air and the output of the expansion turbine (9), which valve is activated via a signal converter (25) that is arranged on the anti-ice grill (14) and detects the differential pressure arising.

7. Device according to claim 5 or 6, **characterized in that** the valve (24, 26) is activated electrically.

8. Device according to claim 5 or 6, **characterized in that** the valve (24, 26) is activated pneumatically.

## Revendications

1. Dispositif de climatisation de la zone de cabine d'avions de passagers à l'aide d'air frais (1) acheminé de l'extérieur et d'air puisé (3) à partir d'un réacteur avec au moins un échangeur thermique (4, 5), une soufflerie (7), un compresseur (8), une turbine à expansion (9), un condensateur (11), au moins un séparateur d'eau (13) et un réchauffeur à retour (10), **caractérisé en ce qu'**un séparateur d'eau à basse pression (12) disposé dans un deuxième chemin de ligne séparable d'un chemin de ligne comprenant le séparateur d'eau à haute pression a été prévu en plus du premier séparateur d'eau (13) conçu comme séparateur d'eau à haute pression et **en ce que** des valves marche-arrêt (20, 20', 21 - 23) destinées à l'alimentation alternative d'un des deux chemins de ligne comprenant les séparateurs d'eau (12, 13) ont été prévues.

2. Dispositif selon la revendication 1, avec un premier chemin de ligne connu formé par le réchauffeur à retour (10), le condensateur (11) et le séparateur d'eau à haute pression (13), **caractérisé en ce que** un grillage anti-glace (14) a également été disposé dans le deuxième chemin de ligne séparable d'un premier chemin de ligne.

3. Dispositif selon la revendication 2, **caractérisé en ce qu'**une autre vanne pouvant être alimentée via une pression différentielle au niveau du grillage anti-glace (14) a été prévue entre la sortie du compresseur (8) et l'entrée du condensateur (11), parallèlement à la turbine à expansion (9).

4. Dispositif selon une des revendications 1 à 3, **caractérisé en ce qu'**une des vannes marche-arrêt (20') a été disposée entre la sortie du compresseur (8) et l'entrée de la turbine à expansion (9).

5. Dispositif selon une des revendications 2 ou 3, **caractérisé en ce qu'**une vanne combinée (24) commandée par un convertisseur de signal (25) captant la pression différentielle agissant et disposé contre le grillage anti-glace (14) a été prévue entre l'entrée du compresseur (8) et la sortie de la turbine à expansion (9).

6. Dispositif selon une des revendications 2 ou 3, **caractérisé en ce qu'**une vanne combinée (26) commandée par un convertisseur de signal (25) captant la pression différentielle agissant et disposé contre le grillage anti-glace (14) a été prévue entre l'ouverture d'entrée (3) de l'air puisé du réacteur et la sortie de la turbine à expansion (9).

7. Dispositif selon la revendication 5 ou 6, **caractérisé en ce que** la vanne (24, 26) est commandée électriquement.

8. Dispositif selon la revendication 5 ou 6, **caractérisé en ce que** la vanne (24, 26) est commandée de façon pneumatique.
